# EUROPEAN PATENT APPLICATION

(11) **EP 4 763 415 A1**
(43) Date of publication of application: **24.06.2026**
(21) Application number: 24854077.5
(22) Date of filing: 27.06.2024
(51) Int. Cl.: B23Q 17/22, B23B 19/02, B23B 25/06, B23B 49/00, B23Q 17/09, B23Q 17/20, G05B 19/18

(54) **TOOL CUTTING EDGE POSITION DETECTION DEVICE AND MACHINE TOOL**

(30) Priority: 16.08.2023 JP 2023132612
(71) Applicant: Citizen Machinery Co., Ltd., Nagano 389-0206 (JP)
(72) Inventor: SHIDA, Tadayasu, Kitasaku-gun, Nagano 389-0206 (JP); KOTAKE, Kyota, Kitasaku-gun, Nagano 389-0206 (JP)
(74) Representative: Louis Pöhlau Lohrentz
(86) International application number: PCT/JP2024/023312
(87) International publication number: WO 2025/037486

(57) **Abstract**

To detect a cutting-edge position of a tool without chips adhering thereto, a cutting-edge position detection device (30) includes an ejector rod (22) and a tip receiving portion (23) that are disposed inside a rear spindle (20) and are movable to press and discharge a workpiece (W), a servo motor (28), a rear headstock (70), and a control portion (90) that is configured to control the servo motor (28) based on a detection result of an encoder (28b) of the servo motor (28). The control portion (90) is configured to control the rear headstock (70) to move the rear spindle (20) toward a cutting edge (51a) of a tool (51) in a state in which the ejector rod (22) and a tip receiving portion (23) are moved to a standby position. The retraction of the ejector rod (22) is detected when the cutting edge (51a) abuts on the front end surface (23a) of the tip receiving portion (23). The control portion (90) is configured to detect a position of the cutting edge (51a) based on a position of a tip end surface (20A) of the rear spindle (20).

## Description

### [Technical Field]

The present invention relates to a tool cutting edge position detection device and a machine tool.

### [Background Art]

A machine tool machines a workpiece using a tool. Over time, a cutting edge of the tool becomes worn, and the tool may also be broken due to various causes. Further, the tool not only becomes shorter due to wear or breakage, but may also become longer when a material of the workpiece adheres to the cutting edge during machining to form a built-up edge.

When the length of the tool changes in this manner, dimensional accuracy of a product obtained by machining the workpiece deteriorates. Accordingly, the length of the tool is inspected periodically or non-periodically.

Such inspection of the length of the tool is performed by detecting a position of the cutting edge of the tool. For example, a mechanical detection device displaces a contact member to a position at which the cutting edge of the tool is assumed to be present. When the contact member mechanically contacts the cutting edge, the position of the cutting edge is appropriate, and thus the tool is determined to have a normal length (see, for example, Patent Literature 1).

Further, an optical detection device irradiates a position at which the cutting edge of the tool is assumed to be present with light such as laser light. When reflected light from the cutting edge is detected, the position of the cutting edge is appropriate, and thus the tool is determined to have a normal length.

### [Prior Art Documents]

### [Patent Literature]

[Patent Literature 1] Japanese Utility Model Application Publication No. H3-113740

### [Summary of Invention]

### [Problem to be solved]

Incidentally, since a machine tool turns or cuts a workpiece using a tool, chips are generated. The chips may adhere to a contact member, a light source, a light detection portion, and the like, and thus the position of the cutting edge may not be detected accurately.

The present invention has been made in view of the above circumstances, and an object of the present invention is to provide a tool cutting-edge position detection device capable of detecting a position of a cutting edge of a tool in a state in which an influence of chips is reduced, and a machine tool including the tool cutting-edge position detection device.

### [Solution to Problem]

A first aspect of the present invention is a tool cutting-edge position detection device including a movable body disposed inside a spindle that is configured to grip a workpiece, the movable body being movable relative to the spindle in an axial direction of the spindle to press the workpiece inserted into the spindle and discharge the workpiece to an outside of the spindle; a movable body driving mechanism that comprises a drive portion and a detection portion, the drive portion being configured to move the movable body and the detection portion being configured to detect movement of the drive portion; a spindle drive portion that is configured to move the spindle in the axial direction; and a control portion that is configured to control the drive portion based on a detection result of the detection portion. The control portion is configured to move the movable body to a specific position at a tip end of the spindle, and control the spindle drive portion to move the spindle in the axial direction toward a cutting edge of a tool for machining the workpiece while the movable body is at the specific position. The detection portion is configured to detect retraction of the movable body due to contact of the cutting edge of the tool with a tip end of the movable body. The control portion is configured to detect a position of the cutting edge of the tool based on a position of the spindle immediately before a timing at which the detection portion detects the retraction of the movable body, and to determine wear or breakage of the cutting edge based on the detected position of the cutting edge.

A second aspect of the present invention is a machine tool including a spindle that is configured to grip a workpiece; a tool that is configured to machine the workpiece gripped by the spindle; a control device that is configured to control operations of the spindle and the tool; and the tool cutting-edge position detection device according to the present invention. The control device is configured to function as the control portion of the cutting-edge position detection device.

### [Effects of Invention]

The tool cutting-edge position detection device and the machine tool according to the present invention can detect the tool cutting-edge position in a state in which an influence of chips is reduced.

### [Brief Description of Drawings]

[FIG. 1] FIG. 1 is a plan view schematically showing a main configuration of an automatic lathe.
[FIG. 2] FIG. 2 is a cross-sectional view taken along a vertical plane including an axis of a rear spindle, showing a state in which a front end surface of an ejector rod is moved to a standby position coincident with a front end surface of the rear spindle.
[FIG. 3] FIG. 3 is a cross-sectional view taken along a vertical plane including the axis of the rear spindle, showing a state in which the ejector rod is pushed and retracted by a workpiece inserted into the rear spindle.
[FIG. 4] FIG. 4 is a cross-sectional view taken along a vertical plane including the axis of the rear spindle, showing a state in which the front end surface of the ejector rod is moved to the retracted position separated from the insertion-side end surface of the workpiece.
[FIG. 5] FIG. 5 is a block diagram showing configurations of the workpiece ejecting device and the tool cutting-edge position detection device.
[FIG. 6] FIG. 6 is a diagram showing a state in which, with the front end surface of the ejector rod positioned at the predetermined position, the rear spindle moves (advances) forward in the z-axis direction toward the tool.
[FIG. 7] FIG. 7 is a diagram showing a state in which the front end surface of the ejector rod that has advanced integrally with the rear spindle comes into contact with the tool.
[FIG. 8] FIG. 8 is a diagram showing a state in which the ejector rod, of which the front end surface is in contact with the cutting edge of the tool, is relatively retracted with respect to the rear spindle.
[FIG. 9] FIG. 9 is a flowchart showing an example of a flow of the cutting-edge position detection process in the automatic lathe.
[FIG. 10] FIG. 10 is a cross-sectional view taken along a vertical plane including the axis of the rear spindle, showing a modification in which the tip receiving portion of the knockout jig is provided on the front side of the ejector rod, and showing a state in which the front end surface of the tip receiving portion protrudes from the front end surface of the rear spindle and is moved to the predetermined position of the ejector rod and the knockout jig.

### [Detailed Description of Embodiments]

An embodiment of a cutting-edge position detection device and a machine tool according to the present invention will be described with reference to the drawings.

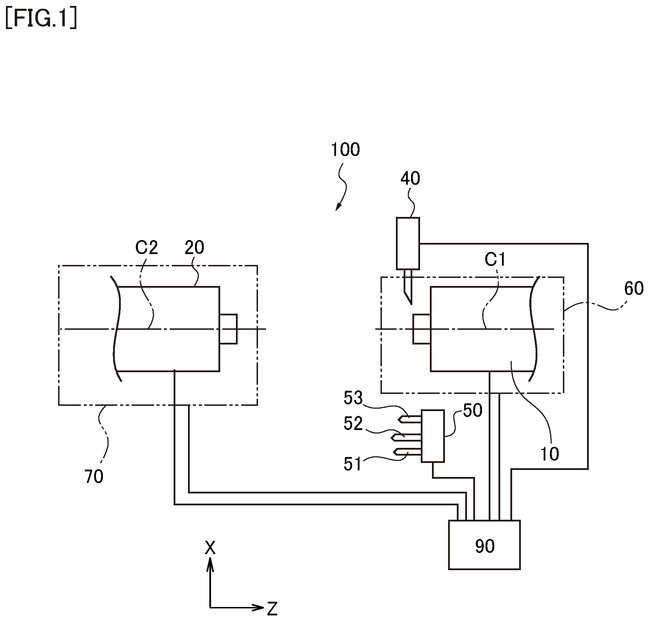

(Basic Configuration of Automatic Lathe) FIG. 1 is a plan view schematically showing a main configuration of an automatic lathe 100.

The automatic lathe 100 is one embodiment of the machine tool according to the present invention. As shown in FIG. 1, the automatic lathe 100 includes the front spindle 10, the rear spindle 20, the gang tool post 40, the rear tool post 50, the front headstock 60, the rear headstock 70, and the control portion 90 (control device).

The front spindle 10 grips the workpiece W that is a bar material, which is a long bar-shaped member, and rotates the workpiece W about the axis C1. The front spindle 10 is fixed to the front headstock 60, and the front spindle 10 is movable along the z-axis by the front headstock 60 moving in the z-axis direction parallel to the axis C1. The front headstock 60 is controlled by the control portion 90 to move in the z-axis direction, and moves the front spindle 10 as described above. The workpiece W gripped by the front spindle 10 is subjected to predetermined machining by the tool provided on the gang tool post 40.

The rear spindle 20 receives, from the front spindle 10, the workpiece W that has been machined while being gripped by the front spindle 10, with the axis C2 of the rear spindle 20 disposed coaxially with the axis C1 of the front spindle 10. The rear spindle 20 receives the workpiece W inserted therein, grips the inserted workpiece W, and rotates the gripped workpiece W about the axis C2.

The workpiece W transferred to the rear spindle 20 is cut to a predetermined length by a cut-off tool provided on the gang tool post 40, in a state in which the workpiece W is also gripped by the front spindle 10. Thereafter, the workpiece W that is gripped by the rear spindle 20 and cut to the predetermined length is machined, on an end surface facing the front spindle 10 (an ejection-side end surface), by tools provided on the gang tool post 40 and/or the rear tool post 50.

The rear spindle 20 is fixed to the rear headstock 70. The rear spindle 20 is movable in the z-axis direction by the rear headstock 70 moving along the z-axis parallel to the axis C2. The rear spindle 20 is also movable in the x-axis direction by the rear headstock 70 moving along the x-axis in a horizontal plane orthogonal to the z-axis. The rear headstock 70 is controlled by the control portion 90 to move in the z-axis direction and the x-axis direction, and moves the rear spindle 20 as described above.

The control portion 90 controls operations of the front spindle 10, the rear spindle 20, the gang tool post 40, the rear tool post 50, the front headstock 60, and the rear headstock 70 (spindle drive portion).

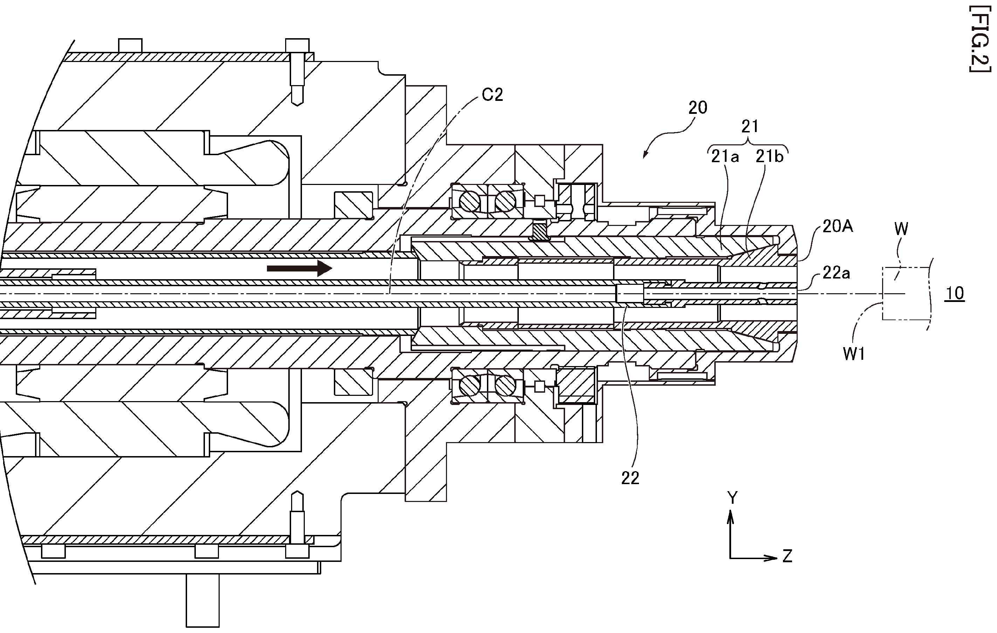

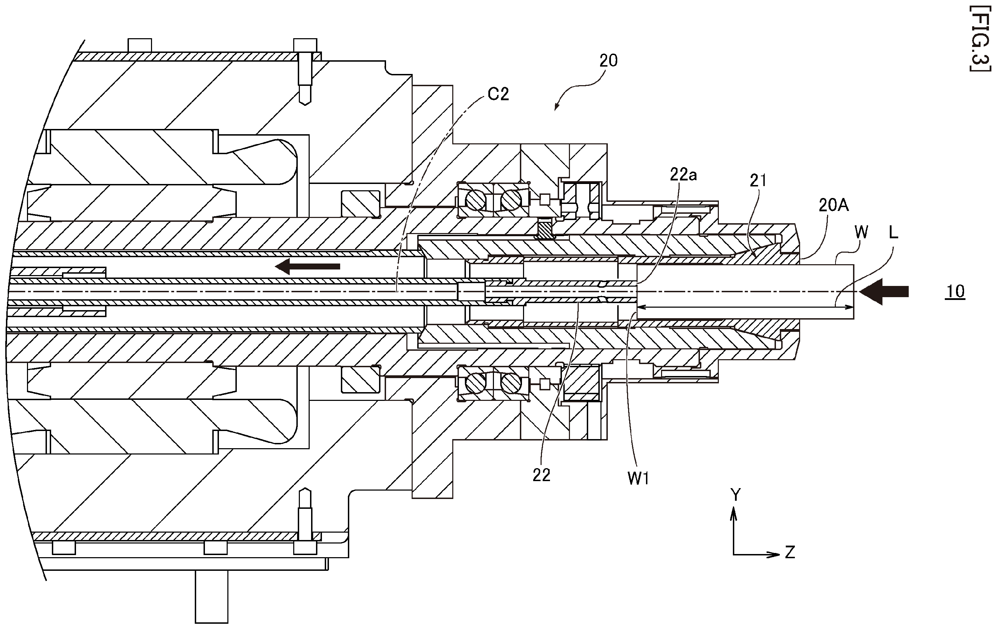

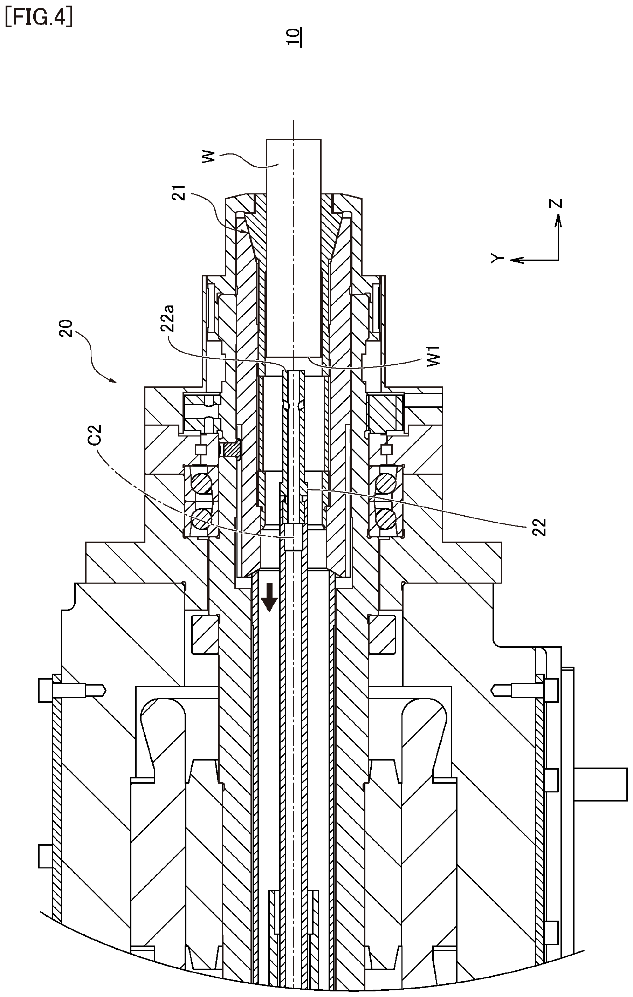

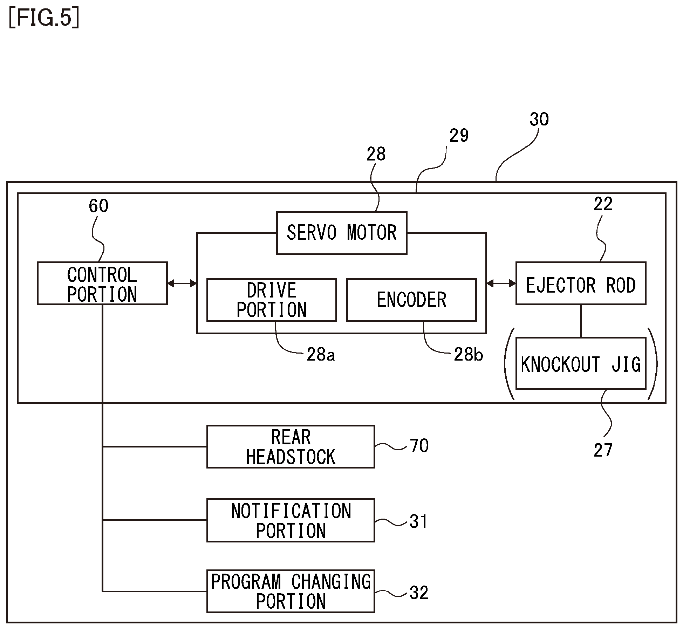

(Workpiece ejecting device) FIGS. 2, 3, and 4 are cross-sectional views taken along a vertical plane including the axis C2 of the rear spindle 20 of the automatic lathe 100. FIG. 2 shows a state in which the front end surface 22a of the ejector rod 22 is moved to a standby position coincident with the front end surface 20A of the rear spindle 20. FIG. 3 shows a state in which the ejector rod 22 is pushed and retracted by the workpiece W inserted into the rear spindle 20. FIG. 4 shows a state in which the front end surface 22a of the ejector rod 22 is moved to a retracted position separated from the insertion-side end surface W1 of the workpiece W. FIG. 5 is a block diagram showing configurations of the workpiece ejecting device 29 and the tool cutting-edge position detection device 30.

The workpiece W is supplied to the rear spindle 20 from the front spindle 10 disposed to face the rear spindle 20. As shown in FIG. 2, the collet chuck 21 is provided at the front end of the rear spindle 20 on a side closer to the front spindle 10. The collet chuck 21 includes the sleeve 21a and the collet 21b. Under control of the control portion 90, the sleeve 21a advances along the axis C2 toward the front end surface 20A of the rear spindle 20, thereby reducing an inner diameter of the collet 21b and gripping the workpiece W inserted into the collet 21b from an outer peripheral surface side.

The rear spindle 20 includes the workpiece ejecting device 29. The workpiece ejecting device 29 ejects the workpiece W gripped by the collet chuck 21 to the outside from the front end surface 20A of the rear spindle 20. As shown in FIG. 5, the workpiece ejecting device 29 includes the control portion 90, the servo motor 28 (movable body driving mechanism), and the ejector rod 22 (movable body). The servo motor 28 and the ejector rod 22 are provided on the rear spindle 20. The control portion 90 is provided on the automatic lathe 100 separately from the rear spindle 20.

As shown in FIGS. 2 to 4, the ejector rod 22 is disposed inside the rear spindle 20 along the axis C2. The ejector rod 22 is a rod-shaped member extending along the axis C2. The ejector rod 22 is provided to be linearly movable along the axis C2 between the standby position shown in FIG. 2 and the retracted position shown in FIG. 4. The ejector rod 22 does not rotate about the axis C2.

The standby position of the ejector rod 22 shown in FIG. 2 is a position at which the ejector rod 22 is disposed before the rear spindle 20 receives the workpiece W from the front spindle 10. At the standby position, the front end surface 22a of the ejector rod 22 coincides with the front end surface 20A of the rear spindle 20.

In a process in which the workpiece W shown in FIG. 3 is inserted into the inside of the rear spindle 20 from a state in which the ejector rod 22 is disposed at the standby position shown in FIG. 2, the insertion-side end surface W1 of the workpiece W comes into contact with the front end surface 22a of the ejector rod 22. As the insertion of the workpiece W proceeds, the workpiece W pushes the ejector rod 22 rearward, and the ejector rod 22 moves rearward (is retracted).

When the workpiece W is inserted into the rear spindle 20 by a predetermined length, insertion of the workpiece W is stopped, and the collet chuck 21 grips the workpiece W under control of the control portion 90. Thereafter, the workpiece W is rotated by the rear spindle 20, and a cut-off tool provided on the gang tool post 40 is pressed against the workpiece W at a position of a predetermined dimension protruding from the rear spindle 20, thereby cutting the workpiece W into a short piece. The workpiece W cut into the short piece is further machined by the tools 51, 52, and 53 provided on the rear tool post 50.

Here, while the workpiece W rotates during machining, the ejector rod 22 cannot rotate. Therefore, before the workpiece W rotates, as shown in FIG. 4, the ejector rod 22 moves rearward (is retracted) such that the front end surface 22a of the ejector rod 22 is separated from the insertion-side end surface W1 of the workpiece W. As shown in FIG. 4, a position at which the ejector rod 22 is disposed rearward away from the insertion-side end surface W1 is a retracted position of the ejector rod 22.

When machining of the workpiece W is completed, gripping of the workpiece W by the collet chuck 21 is released under control of the control portion 90, thereby releasing the workpiece W. Thereafter, when the workpiece W is discharged, in the workpiece ejecting device 29, the control portion 90 controls the servo motor 28 to linearly move the ejector rod 22, which is located at the retracted position shown in FIG. 4, toward the workpiece W along the z-axis. The ejector rod 22 moves forward (advances) in the z-axis direction, and the front end surface 22a of the ejector rod 22 comes into contact with the insertion-side end surface W1 of the workpiece W.

The ejector rod 22 pushes the workpiece W forward, advances to the standby position at which the front end surface 22a of the ejector rod 22 coincides with the front end surface 20A of the rear spindle 20, and ejects the workpiece W to the outside of the rear spindle 20. Accordingly, the ejector rod 22 is an example of a movable body that is movable relative to the rear spindle 20 in an axial direction of the rear spindle 20 so as to eject the workpiece W to the outside of the rear spindle 20.

The servo motor 28 includes a drive portion 28a that is rotationally driven, and an encoder 28b (detection portion). The encoder 28b detects rotation of the drive portion 28a and detects a rotation angle thereof. The control portion 90 controls rotation of the drive portion 28a based on the rotation angle (detection result) detected by the encoder 28b.

The drive portion 28a is connected to the ejector rod 22. The control portion 90 rotates the drive portion 28a to linearly move the ejector rod 22 along the axis C2. The control portion 90 switches between forward movement and backward movement of the ejector rod 22 along the axis C2 by switching a rotation direction of the drive portion 28a between a forward rotation direction and a reverse rotation direction. The control portion 90 adjusts a movement length of the linear movement of the ejector rod 22 by controlling a rotation angle of the drive portion 28a.

(Tool Cutting-Edge Position Detection Device) The rear spindle 20 includes the tool cutting-edge position detection device 30 shown in FIG. 5. The tool cutting-edge position detection device 30 is one embodiment of the tool cutting-edge position detection device according to the present invention. The cutting-edge position detection device 30 detects a position of the cutting edge 51a, which is a tip end of each of the tools 51, 52, and 53 extending in the z-axis direction (a longitudinal direction coincides with the z-axis), provided on the rear tool post 50. The cutting-edge position detection device 30 is configured by using the workpiece ejecting device 29.

The cutting-edge position detection device 30 detects cutting-edge positions of the tools 51, 52, and 53 by using the ejector rod 22 and the servo motor 28 (movable body driving mechanism) of the workpiece ejecting device 29, with the servo motor 28 being controlled by the control portion 90.

In addition to the control portion 90, the servo motor 28, and the ejector rod 22 described above, the cutting-edge position detection device 30 includes the rear headstock 70 as a spindle drive portion, a notification portion 31, and a program changing portion 32. The notification portion 31 and the program changing portion 32 are controlled by the control portion 90.

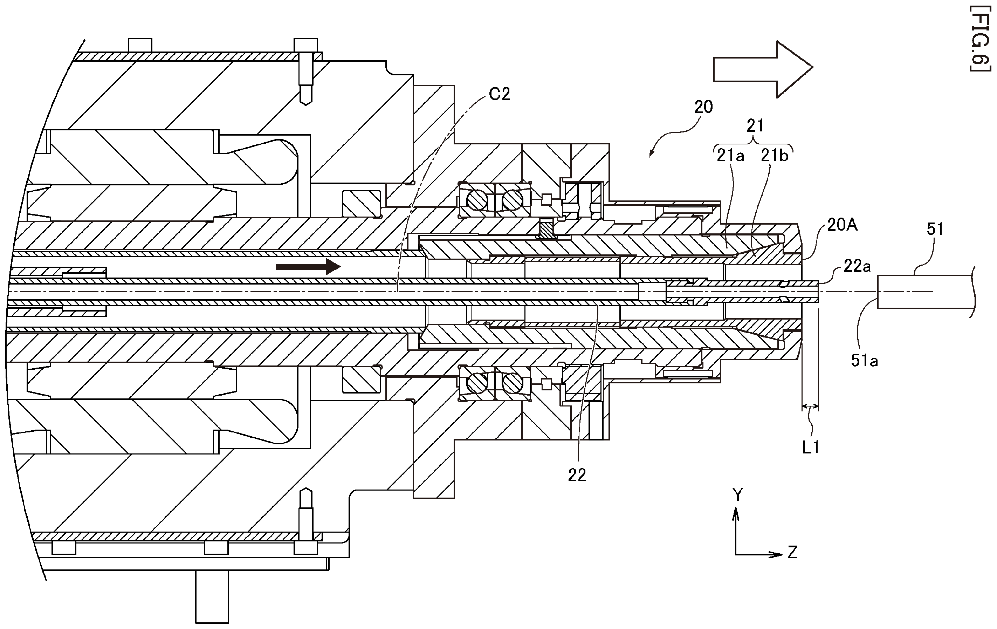

First, the control portion 90, as a component of the cutting-edge position detection device 30, controls driving of the servo motor 28, as shown in FIG. 6, such that the front end surface 22a of the ejector rod 22 is moved to a specific position protruding from the front end surface 20A of the rear spindle 20 by a dimension L1. The specific position of the ejector rod 22 is a position protruding by the dimension L1 from the standby position at the time of delivery of the workpiece W shown in FIG. 2.

Subsequently, the control portion 90 controls driving of the rear headstock 70 so as to move the rear spindle 20 in the x-axis direction. Specifically, as shown in FIG. 6, the control portion 90 moves the rear headstock 70 in the x-axis direction such that the axis C2 of the rear spindle 20 coincides with an axis of the tool 51 provided on the rear tool post 50, which is a target for detection of a cutting-edge position (an axis of the tool 52 when the tool 52 is targeted, or an axis of the tool 53 when the tool 53 is targeted).

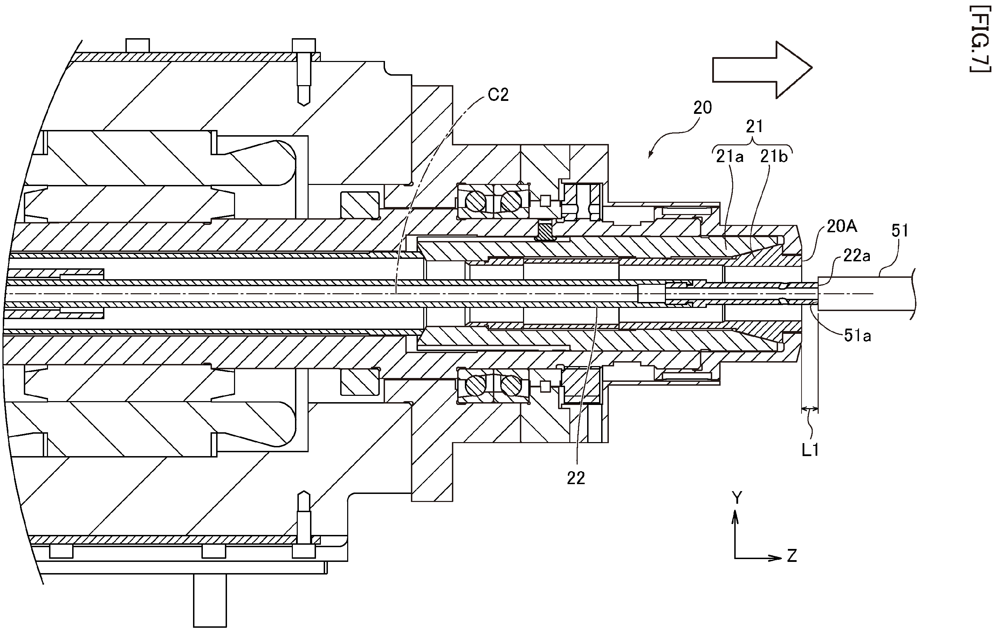

Thereafter, the control portion 90 moves the rear headstock 70 forward in the z-axis so as to bring the rear spindle 20 closer to the tool 51 in a coaxial arrangement in which the axis C2 of the rear spindle 20 coincides with the axis of the tool 51. The rear spindle 20 gradually approaches the tool 51. Eventually, as shown in FIG. 7, the cutting edge 51a, which is a tip end of the tool 51, comes into contact with the front end surface 22a of the ejector rod 22 protruding from the front end surface 20A of the rear spindle 20. Assuming that a coordinate position of the front end surface 20A of the rear spindle 20 on the z-axis at this time is z1, a position of the front end surface 22a of the ejector rod 22 is z1+L1.

The control portion 90 stores an initial position of the front end surface 20A before the movement of the rear headstock 70 and detects the movement amount of the rear headstock 70. Therefore, based on the movement amount of the rear headstock 70, the coordinate position z1 of the front end surface 20A of the rear spindle 20 after the movement can be recognized in real time as a coordinate position after the movement relative to the initial position.

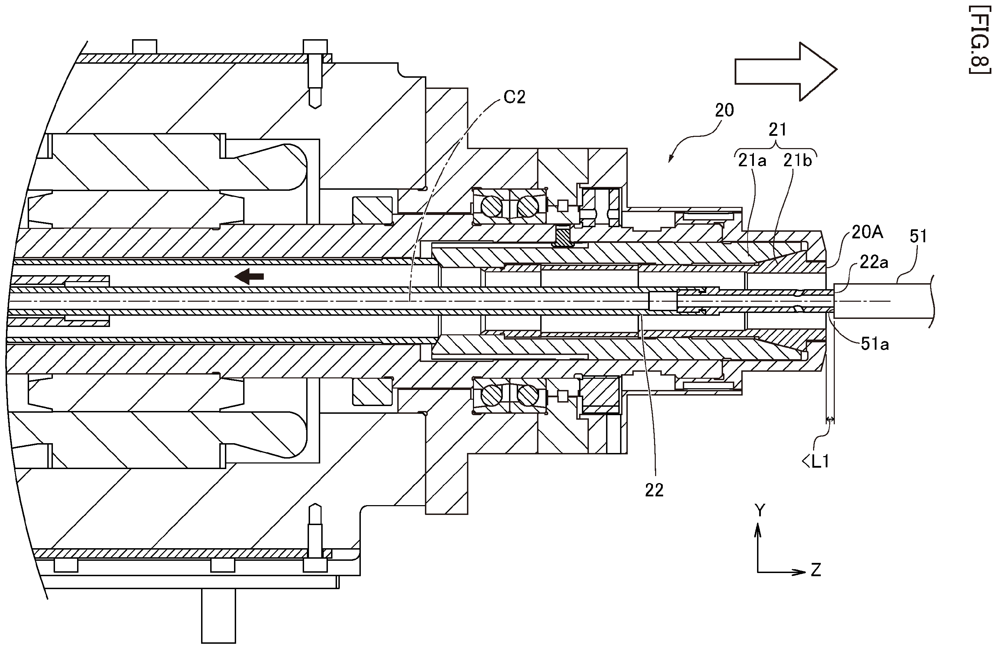

The ejector rod 22 that moves integrally with the rear spindle 20 stops advancing when the front end surface 22a comes into contact with the cutting edge 51a of the tool 51, while the rear spindle 20 continues to advance. Accordingly, as illustrated in FIG. 8, the ejector rod 22 retracts relative to the rear spindle 20 along the z-axis. At this time, the dimension of the front end surface 22a of the ejector rod 22 protruding from the tip end surface 20A of the rear spindle 20 is smaller than the dimension L 1 at the specific position (<L1).

When the ejector rod 22 moves rearward relative to the rear spindle 20, the drive portion 28a of the servo motor 28 connected to the ejector rod 22 rotates in accordance with the movement of the ejector rod 22. That is, the drive portion 28a rotates by a rotation angle corresponding to a rearward movement amount of the ejector rod 22. When the drive portion 28a rotates, the encoder 28b also rotates in synchronization with the rotation of the drive portion 28a. Accordingly, the encoder 28b detects the rotation of the drive portion 28a caused by the rearward movement of the ejector rod 22 along the z-axis.

A rearward movement amount of the ejector rod 22 by which the encoder 28b can detect rotation is, for example, about 5 [µm]. However, a movement amount of the ejector rod 22 detectable by the encoder 28b is not limited to 5 [µm], and may be larger than 5 [µm] or smaller than 5 [µm].

As described above, since the control portion 90 recognizes the position of the front end surface 20A of the rear spindle 20 in real time, the control portion 90 stores a movement position of the front end surface 20A of the rear spindle 20 immediately before a timing at which the encoder 28b detects rotation. The timing immediately before detection of the rotation refers to a movement position (coordinate position z1) of the front end surface 20A of the rear spindle 20 that is last recognized during a period in which rotation is not detected.

Here, a coordinate position of the front end surface 22a of the ejector rod 22 that comes into contact with the cutting edge 51a of the tool 51 is a position protruding forward in the z-axis direction by the dimension L1 from the coordinate position z1 of the front end surface 20A of the rear spindle 20. Accordingly, the control portion 90 can obtain the position of the cutting edge 51a of the tool 51 by adding the dimension L1 to the stored coordinate position z1 of the front end surface 20A, thereby obtaining a coordinate position z1 + L1.

The tool cutting-edge position detection device 30 according to the present embodiment can detect the actual position of the cutting edge 51a of the tool 51 provided on the rear tool post 50 that is obtained in this manner. Since chips are less likely to adhere to the front end surface 22a of the ejector rod 22, the tool cutting-edge position detection device 30 can detect the cutting-edge position of the tool in a state in which an influence of chips is reduced.

In the tool cutting-edge position detection device 30 according to the present embodiment, the control portion 90, through the above-described cutting-edge position detection operation, stores the cutting-edge position of the tool 51 in an initial state in which the tool 51 is disposed on the rear tool post 50 as a reference cutting-edge position 51a, and stores a length of the tool 51 in the initial state in association with the cutting-edge position in the initial state.

In this case, after time elapses from the initial state, the cutting-edge position detection device 30 can also calculate a change in a length of the tool 51 from the initial state based on a difference between the position of the cutting edge 51a detected by the cutting-edge position detection device 30 and the position of the cutting edge 51a in the initial state stored in advance in the control portion 90. In this case, the control portion 90 can also determine breakage or wear of the cutting edge of the tool based on the change in the length from the initial state.

In the tool cutting-edge position detection device 30, as a reference position of the reference cutting edge 51a, instead of the cutting edge 51a of the tool 51 in an initial state, a dedicated reference jig for detecting a reference position, which is not used as the machining tool 51, may be installed on the rear tool post 50. In this case, the control portion 90 may store, as the reference position, a position of a cutting edge when the cutting edge of the reference jig is contacted.

Further, the tool cutting-edge position detection device 30 can determine that the tool 51 is not provided as designed in a machining program (that is, the tool 51 is not installed) when the tool cutting-edge position detection device 30 does not detect rotation by the encoder 28b even after the rear spindle 20 is advanced to a substantial position. The substantial position is, for example, a position advanced by 3 [mm] or more from a position at which the front end surface 22a of the ejector rod 22 is assumed to come into contact with the cutting edge 51a of the tool 51 when the tool 51 is provided at the designed position.

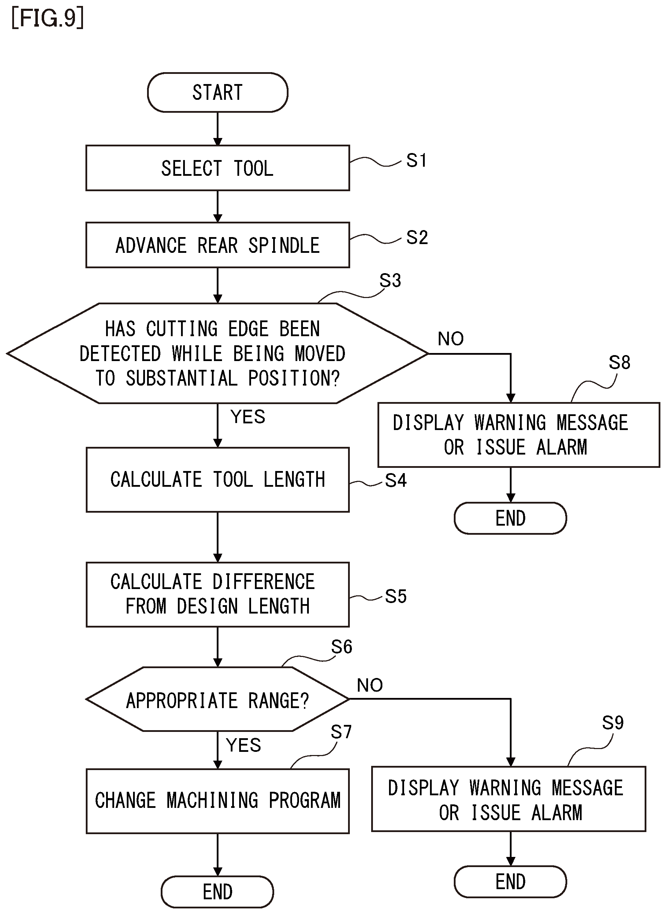

The automatic lathe 100 according to the present embodiment configured as described above operates, for example, as follows. FIG. 9 is a flowchart illustrating an example of a flow of a cutting-edge position detection process in the automatic lathe 100.

Between machining operations on a normal workpiece W, the automatic lathe 100 starts, by the cutting-edge position detection device 30, a cutting-edge position detection process for the tools 51, 52, and 53 as illustrated in FIG. 9, and detects an arrangement state of the tools 51, 52, and 53 (presence or absence of arrangement and suitability of length (wear or breakage of the cutting edge 51a, presence or absence of a built-up edge, and the like)).

The cutting-edge position detection device 30 selects, automatically under the control of the control portion 90 or by a manual operation by a user, a tool that is a detection target of an arrangement state (S1 in FIG. 9). Subsequently, the automatic lathe 100 controls the rear headstock 70, for example, such that the rear spindle 20 becomes coaxial with the selected tool 51. After the rear spindle 20 becomes coaxial, the automatic lathe 100 advances the rear spindle 20 toward the tool 51 (S2).

The cutting-edge position detection device 30 determines whether the cutting edge 51a of the tool 51 has been detected while the rear spindle 20 is being moved to a substantial position (S3). When the cutting-edge position detection device 30 determines that the cutting edge 51a of the tool 51 has not been detected while the rear spindle 20 is being moved to the substantial position (NO in S3), the control portion 90 controls the notification portion 31. The notification portion 31 displays a warning message on a monitor or issues an alarm (S8), and the cutting-edge position detection process ends.

On the other hand, when the cutting-edge position detection device 30 determines that the cutting edge 51a of the tool 51 has been detected while the rear spindle 20 is being moved to a substantial position (YES in S3), the control portion 90 calculates a length of the tool 51 based on a position of the detected cutting edge 51a (S4). The control portion 90 then calculates a difference between the calculated length of the tool 51 and a design length of the tool 51 in the machining program (S5), the difference being equal to (the calculated length of the tool 51) - (the design length of the tool 51).

The control portion 90 of the cutting-edge position detection device 30 determines whether the calculated difference is within an appropriate range or not (S6). This determination as to whether the calculated difference is within the appropriate range or not is performed by comparing an absolute value of the difference with a threshold stored in advance by the control portion 90. The control portion 90 determines that the calculated difference is within the appropriate range when the absolute value of the difference is less than the threshold (YES in S6). The control portion 90 determines that the calculated difference is not within the appropriate range when the absolute value of the difference is greater than the threshold (NO in S6). The threshold by which the control portion 90 determines whether the calculated difference is within the appropriate range or not is a value set in advance as a value suitable for determining whether the difference is within the appropriate range or not, and is an extremely small dimensional value (for example, less than 10 [µm]) by which a normal degree of wear of the tool 51 can be determined.

The reason why the control portion 90 compares the threshold with the absolute value of the difference is that, when the tool is worn, the difference becomes a negative value, whereas, when a built-up edge is formed on the tool, the difference becomes a positive value. Accordingly, whether the difference falls within the appropriate range or not can be appropriately determined both when the difference is a negative value and when the difference is a positive value.

When the control portion 90 determines that the difference falls within the appropriate range (YES in S6), the control portion 90, as necessary, changes the machining program by using the difference as a correction value for correcting the cutting-edge position in the machining program (S7), and ends the cutting-edge position detection process. The phrase "as necessary" means cases such as a case where the tool 51 is worn (in which the difference is a negative value and an absolute value of the difference is greater than the threshold) and the machining program is to be changed, and a case where a built-up edge is formed on the tool 51 (in which the difference is a positive value and the absolute value of the difference is greater than the threshold) and the machining program is not to be changed and the cutting-edge position detection process is ended.

When the control portion 90 determines that the difference does not fall within the appropriate range (NO in S6), the control portion 90 controls the notification portion 31. The notification portion 31 displays a warning message on a monitor or issues an alarm (S9), and the cutting-edge position detection process ends.

The flowchart illustrated in FIG. 9 shows that the machining program is changed (S7) in accordance with the arrangement state of the tool detected by the cutting-edge position detection device 30. However, the automatic lathe 100 according to the present embodiment is not limited to changing the machining program, and the machining program need not be changed in accordance with the detected arrangement state of the tool.

In the automatic lathe 100 according to the present embodiment, the specific position of the ejector rod 22 before the detection of the position of the cutting edge 51a of the tool 51 is set to a position at which the front end surface 22a protrudes from the tip end surface 20A of the rear spindle 20. However, the specific position of the ejector rod 22 in the present invention is not limited to the position at which the front end surface 22a protrudes from the tip end surface 20A of the rear spindle 20.

That is, in the present invention, when the tool 51 for which the cutting-edge position is to be detected has an outer diameter larger than that of the workpiece W and thus cannot be inserted into the inside of the rear spindle 20, it is necessary that the specific position of the ejector rod 22 be a position at which the front end surface 22a protrudes from the tip end surface 20A of the rear spindle 20.

However, when the tool 51 for which the cutting-edge position is to be detected can be inserted into the rear spindle 20 and has an outer diameter equal to or smaller than that of the workpiece W, the specific position of the ejector rod 22 may be a position at which the front end surface 22a matches the tip end surface 20A of the rear spindle 20 (a standby position) or a position behind the tip end surface 20A (a position inside the rear spindle 20).

In the automatic lathe 100 according to the present embodiment, the control portion 90 controls the servo motor 28 such that a predetermined excitation holding force is applied to the servo motor 28 to prevent the ejector rod 22 of the workpiece ejecting device 29 from moving unintentionally. By holding the servo motor 28 in a stop state with a predetermined excitation holding force, the ejector rod 22 is held at a predetermined position so that the ejector rod 22 does not move, which can prevent unintended movement.

The unintended movement refers to a case where the ejector rod 22 is moved, not by driving the servo motor 28 for the purpose of moving the ejector rod 22, but, for example, by vibration or the like generated by operating the automatic lathe 100, despite there being no purpose of moving the ejector rod 22.

As described above, when the servo motor 28 is held in the stop state by the excitation holding force, there is a possibility that the ejector rod 22 serving as the cutting-edge position detection device 30 may be hindered from retracting from the specific position after the ejector rod 22 comes into contact with the cutting edge 51a of the tool 51.

Accordingly, in the automatic lathe 100, during an operation in which, after the ejector rod 22 is moved to the specific position, the cutting edge 51a of the tool 51 comes into contact with the ejector rod 22 and causes the ejector rod 22 to retract, it is preferable that the control portion 90 does not apply the excitation holding force to the servo motor 28 or reduces the excitation holding force applied to the servo motor 28 to such an extent that the operation in which the tool 51 pushes the ejector rod 22 stopped at the specific position backward is not hindered.

The excitation holding force to such an extent that the operation in which the tool 51 pushes the ejector rod 22 stopped at the specific position backward is not hindered means a degree of excitation holding force by which, even in a state where the excitation holding force acts on the servo motor 28, the tool 51 can move the ejector rod 22 backward when the tool 51 pushes the ejector rod 22 backward.

In the cutting-edge position detection device 30 according to the present embodiment, the ejector rod 22 and the servo motor 28 are provided on the rear spindle 20. However, the cutting-edge position detection device according to the present invention is not limited to a device in which the ejector rod 22 and the servo motor 28 are provided on the rear spindle 20.

That is, in the cutting-edge position detection device 30 according to the present embodiment, since the front spindle 10 of the automatic lathe 100 performs a function of supplying the workpiece W, the description above has been made with respect to the rear spindle 20 as a side to which the workpiece W is supplied.

However, in a machine tool in which the front spindle 10 is supplied, from the tip end surface side, with a workpiece W having a predetermined length that is not a rod-shaped member, the front spindle 10 may include the workpiece ejecting device 29 including the ejector rod 22 and the servo motor 28. Accordingly, when the front spindle 10 includes the workpiece ejecting device 29, the ejector rod 22 and the servo motor 28 of the workpiece ejecting device 29 included in the front spindle 10 may be configured as the cutting-edge position detection device 30. In this case, the machine tool including the cutting-edge position detection device according to the present invention need not include a rear spindle.

The cutting-edge position detection device 30 according to the present embodiment includes the notification portion 31 and the program changing portion 32. However, the cutting-edge position detection device according to the present invention may not include the notification portion 31 and the program changing portion 32.

In the cutting-edge position detection device 30 according to the present embodiment, the encoder 28b of the servo motor 28 detects a rotation angle of the drive portion 28a. However, the encoder 28b may be a linear encoder that directly detects a movement length of a linear movement of the ejector rod 22 corresponding to the rotation angle of the drive portion 28a.

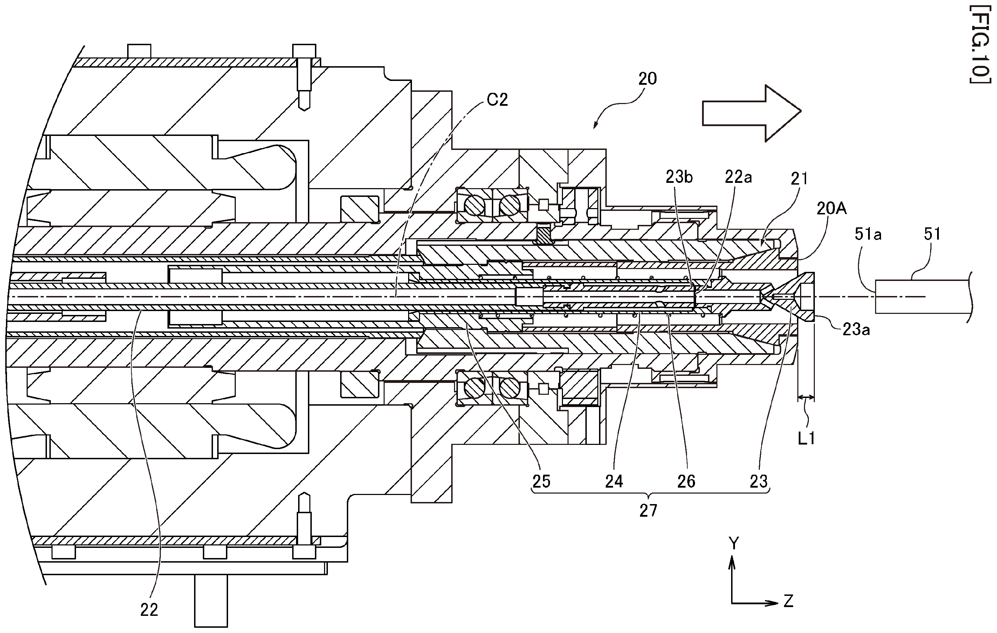

(Modification) FIG. 10 is a cross-sectional view showing a cross section taken along a vertical plane including the axis C2 of the rear spindle 20, and illustrates a modification in which a tip receiving portion 23 of a knockout jig 27 is provided on a front side of an ejector rod 22. FIG. 10 shows a state in which a front end surface 23a of the tip receiving portion 23 protrudes from a tip end surface 20A of the rear spindle 20 and the ejector rod 22 and the knockout jig 27 are moved to a specific position.

The automatic lathe 100 according to the above-described embodiment has a configuration in which the ejector rod 22 provided inside the rear spindle 20 directly pushes a workpiece W to discharge the workpiece W to an outside of the rear spindle 20. However, the automatic lathe 100 may have a configuration in which the knockout jig 27 is provided on a front side of the ejector rod 22.

That is, when the automatic lathe 100 includes the knockout jig 27 as the workpiece ejecting device 29, the present invention is also applicable to an automatic lathe 100 including the workpiece ejecting device 29 in which the knockout jig 27 comes into contact with the workpiece W and the ejector rod 22 pushes the workpiece W via the knockout jig 27 to discharge the workpiece W to an outside of the rear spindle 20. This configuration can be regarded as a modification of the embodiment.

As illustrated in FIG. 10, the knockout jig 27 includes the tip receiving portion 23, a tubular portion 24, a base portion 25, and a coil spring 26. The tip receiving portion 23 is disposed on a front side of the ejector rod 22, and a rear end surface 23b is in contact with a front end surface 22a of the ejector rod 22. When the ejector rod 22 moves forward (toward the tip end surface 20A of the rear spindle 20), the tip receiving portion 23 is pushed by the ejector rod 22 and advances integrally with the ejector rod 22.

When the workpiece W comes into contact with the front end surface 23a of the tip receiving portion 23 from a front side, the tip receiving portion 23 is pushed backward, and the tip receiving portion 23 moves backward along the z-axis. At this time, with the rear end surface 23b being in contact with the front end surface 22a of the ejector rod 22, the tip receiving portion 23 pushes the ejector rod 22 backward and retracts integrally with the ejector rod 22.

The tip receiving portion 23 is formed to have an outer diameter slightly smaller than an inner diameter of the collet chuck 21. The tip receiving portion 23 includes a through hole extending between the rear end surface 23b and the front end surface 23a. During the discharge of the workpiece W, air is supplied through the through hole to perform air blowing. Accordingly, even when the workpiece W gripped by the rear spindle 20 is machined to include a through hole extending in the axial direction, or when the workpiece W originally includes a hollow through hole, an outer circumferential portion of the workpiece W is held by the front end surface 23a, and chips are prevented from entering an inside of the rear spindle 20 by air blowing during the discharge of the workpiece W through the through hole of the workpiece W.

The tubular portion 24 is fixed to a rear portion of the tip receiving portion 23 and moves integrally with the tip receiving portion 23 along the axis C2. The tubular portion 24 is formed in a cylindrical shape surrounding a portion on a tip end side of the ejector rod 22 from an outer side in a radial direction with respect to the axis C2.

The base portion 25 is fixed to the sleeve 21a of the rear spindle 20 and moves integrally with the sleeve 21a. The base portion 25 is also formed in a cylindrical shape surrounding the ejector rod 22 from the outside in the radial direction around the axis C2. The base portion 25 is further formed such that an inner diameter of the cylinder is larger than an outer diameter of the tubular portion 24, and the tubular portion 24 can pass through an inner space when the tubular portion 24 retracts integrally with the tip receiving portion 23.

The coil spring 26 is formed to extend in the direction of the axis C2, and has a first end in contact with the tip receiving portion 23 from the rear and a second end in contact with the base portion 25 from the front to bias the tip receiving portion 23 in a forward pushing direction with respect to the base portion 25.

When the front end surface 22a is in contact with the rear end surface 23b of the tip receiving portion 23 and the ejector rod 22 moves forward, the ejector rod 22 pushes the tip receiving portion 23 forward while extending the coil spring 26. On the other hand, when the tip receiving portion 23 moves backward, the tip receiving portion 23 pushes the ejector rod 22 backward while contracting the coil spring 26.

The knockout jig 27 as a whole is rotatable about the axis C2. Accordingly, the tip receiving portion 23 rotates together with the workpiece W while the tip receiving portion 23 is in contact with the rotating workpiece W. However, the ejector rod 22 does not rotate about the axis C2. Accordingly, the ejector rod 22 retracts to the retraction position in which the front end surface 22a is separated from the rear end surface 23b of the tip receiving portion 23. At this time, the coil spring 26 biases the tip receiving portion 23 forward to prevent the front end surface 23a of the tip receiving portion 23 from separating from the insertion side end surface W1 of the workpiece W, thereby preventing chips from entering the inside of the rear spindle 20 through the through hole formed in the workpiece W.

In the automatic lathe 100 according to the modification, the ejector rod 22 and the knockout jig 27 function as a movable body in the present invention. In the automatic lathe 100, as illustrated in FIG. 10, the control portion 90 sets, as a specific position, a position where the front end surface 23a of the tip receiving portion 23 protrudes from the tip end surface 20A of the rear spindle 20 by the dimension L1. In this state, the control portion 90 advances the rear spindle 20 toward the tool 51. When the cutting edge 51a of the tool 51 comes into contact with the front end surface 23a of the tip receiving portion 23, and the ejector rod 22 retracts via the tip receiving portion 23, the control portion 90 detects the position of the cutting edge 51a.

The tool cutting-edge position detection device 30 according to the modification configured as described above can detect an actual position of the cutting edge 51a of the tool 51 provided on the rear tool post 50, similarly to the tool cutting-edge position detection device 30 according to the above-described embodiment.

### [Cross-reference to Related Application]

The present application claims priority based on Japanese Patent Application No. 2023-132612 filed with the Japan Patent Office on August 16, 2023, the entire disclosure of which is entirely incorporated herein by reference.

## Claims

1. A tool cutting-edge position detection device comprising:
a movable body disposed inside a spindle that is configured to grip a workpiece, the movable body being movable relative to the spindle in an axial direction of the spindle to press the workpiece inserted into the spindle and discharge the workpiece to an outside of the spindle;
a movable body driving mechanism that comprises a drive portion and a detection portion, the drive portion being configured to move the movable body and the detection portion being configured to detect movement of the drive portion;
a spindle drive portion that is configured to move the spindle in the axial direction; and
a control portion that is configured to control the drive portion based on a detection result of the detection portion,
wherein the control portion is configured to move the movable body to a specific position at a tip end of the spindle, and control the spindle drive portion to move the spindle in the axial direction toward a cutting edge of a tool for machining the workpiece while the movable body is at the specific position,
wherein the detection portion is configured to detect retraction of the movable body due to contact of the cutting edge of the tool with a tip end of the movable body, and
wherein the control portion is configured to:
detect a position of the cutting edge of the tool based on a position of the spindle immediately before a timing at which the detection portion detects the retraction of the movable body, and
determine wear or breakage of the cutting edge based on the detected position of the cutting edge.

2. The tool cutting-edge position detection device according to claim 1, wherein the specific position is a position where the tip end of the movable body protrudes from a tip end surface of the spindle.

3. The tool cutting-edge position detection device according to claim 1,
wherein the movable body driving mechanism is a servo motor, and
wherein the control portion is configured to decrease an excitation holding force of the servo motor when the cutting edge of the tool abuts on the tip end of the movable body.

4. The tool cutting-edge position detection device according to claim 1, further comprising:
a notification portion that is configured to notify that the position of the cutting edge of the tool is not within a preset predetermined range,
wherein the control portion is configured to control the notification portion to make a notification when the position of the cutting edge of the tool detected by the control portion is not within the preset predetermined range.

5. A machine tool comprising:
a spindle that is configured to grip a workpiece;
a tool that is configured to machine the workpiece gripped by the spindle;
a control device that is configured to control operations of the spindle and the tool; and
the tool cutting-edge position detection device according to any one of claims 1 to 4,
wherein the control device is configured to function as the control portion of the cutting-edge position detection device.

6. The machine tool according to claim 5, wherein the control device is configured to change a machining program when the position of the cutting edge of the tool detected by the control device is not within a preset predetermined range, the machining program controlling the operations of the spindle and the tool.
